# EUROPÄISCHE PATENTSCHRIFT

(11) **EP 0 489 688 B1**
(45) Veröffentlichungstag und Bekanntmachung des Hinweises auf die Patenterteilung: **06.03.1996**
(21) Anmeldenummer: 91810924.0
(22) Anmeldetag: 27.11.1991
(51) Int. Cl.: C07F 7/18, C08K 5/54, C09J 175/04

(54) **Haftvermittler**
Coupling agent
Agent de couplage

(30) Priorität: 04.12.1990 CH 3815/90
(43) Veröffentlichungstag der Anmeldung: 10.06.1992
(73) Patentinhaber: CIBA-GEIGY AG, CH-4002 Basel (CH)
(72) Erfinder: Mühlebach, Andreas, Dr., CH-1782 Belfaux (CH); Simon, Hubert, Dr., F-68100 Mulhouse (FR)

(56) Entgegenhaltungen:
- EP-A- 0 243 802
- EP-A- 0 406 160
- US-A- 4 629 775
- CHEMICAL ABSTRACTS, Band 111, Nr. 18, 1989, Columbus, OH (US); C. SHIMIZU et al., Seite 124, Nr. 156046r
- JOURNAL OF ORGANIC CHEMISTRY, Band 55, Nr. 6, 1990; G. PARRINELLO et al., Seiten 1772-1779

## Beschreibung

Die vorliegende Erfindung betrifft stickstoffhaltige Silanverbindungen und Polyurethanharze, welche diese Silanverbindungen als Haftvermittler enthalten.

Die Haftung von ausgehärteten Polyurethanen auf verschiedenen Substraten, wie beispielsweise Glas, Kunststoff oder Metall, ist in vielen technischen Anwendungen unbefriedigend, was zum Einsatz von Grundiermitteln ("Primer") führte. Damit kann ein guter Verbund zwischen Polyurethan und Substrat erreicht werden. Der Verbund wird dabei durch hohe Feuchtigkeit, erhöhte Temperaturen und hohe mechanische Belastung wenig beeinträchtigt. Als Primer haben sich z.B. Aminoalkyl-alkoxysilane bewährt (vgl. Plueddemann et al. "Silan coupling agents", Plenum Press, NY [1982]). Allerdings können die wirksamsten Aminosilan-Haftvermittler als eingebaute Haftvermittler in feuchtigkeitshärtenden Polyurethanen unmodifiziert nicht verwendet werden, da die Aminogruppen mit Isocyanatgruppen abreagieren. Daher sind in der DE-A 3414 877 Ketimine und Aldimine von Aminoalkylsilanen beschrieben worden, welche Polyurethan-Klebstoffen zugesetzt werden können, ohne deren Lagerstabilität zu beeinträchtigen.

Weiter sind in den US-A 3,787,416 und 4,289,869 cyclische Aminale als Härter für Polyurethanharze beschrieben. Aus der US-A 4,404,379 sind ferner Umsetzungsprodukte von cyclischen Aminalen mit Isocyanaten zu Addukten bekannt, die sich als Härter für Polyurethanharze eignen. Jedoch enthalten diese Aminale bzw. Aminaladdukte keine silanhaltigen Gruppen.

Es wurde nun eine Klasse von Verbindungen gefunden, die 1- oder 2-Komponenten-Polyurethanharz-Klebstoffen, -Dichtungsmassen, -Lacken sowie -Isolierstoffen zugesetzt werden können, wobei eine signifikant erhöhte Haftung auf Glas, Metall, lackiertem Stahl sowie Kunststoffen erzielt wird, und gleichzeitig die Härtungsgeschwindigkeit nicht beeinträchtigt oder sogar erhöht wird.

Die vorliegende Erfindung betrifft Verbindungen der allgemeinen Formel I 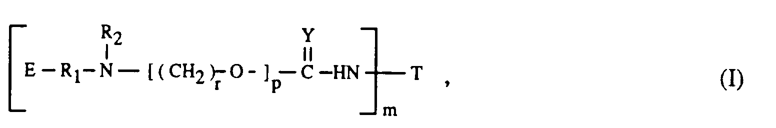 worin
- R₁: C₂-C₃ Alkylen und
- R₂: Wasserstoff, unsubstituiertes oder durch -OH, -CN oder -Si(OR₃)_{3-q}(R₄)_{q} substituiertes C₁-C₆-Alkyl oder C₂-C₆-Alkenyl bedeuten, wobei
- R₃: C₁-C₄-Alkyl ist oder zwei Reste R₃ zusammen C₁-C₄-Alkylen bedeuten,
- R₄: C₁-C₄ Alkyl oder Phenyl ist und
- q: Werte 0 bis 2 haben kann, ferner
- E: einen Rest der Formel 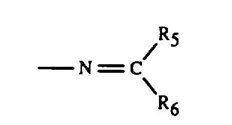 darstellt, wobei
R₅ und R₆ unabhängig voneinander Wasserstoff, C₁-C₄-Alkyl, Aryl-substituiertes Ethenyl, Aryl, Heteroaryl oder Reste der Formeln IIa oder IIb 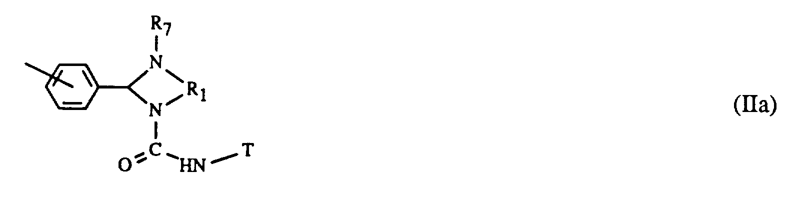 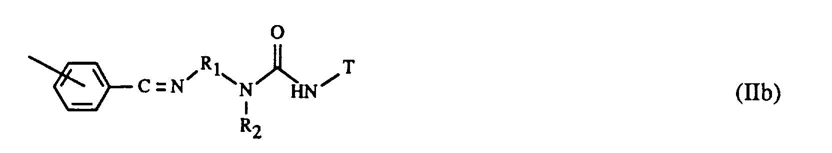 sind, mit der Massgabe, dass mindestens einer der Reste R₅ oder R₆ Aryl-substituiertes Ethenyl, Aryl, Heteroaryl oder einen Rest der Formeln IIa oder IIb bedeutet, oder
- E: zusammen mit R₂ einen Rest der Formel 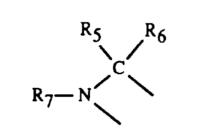 bedeutet, worin
R₇ Wasserstoff, C₁-C₄-Alkyl oder -R₉-Si(OR₃)_{3-q}(R₄)_{q} ist und R₃, R₄, R₅, R₆ und q die vorstehende Bedeutung haben und
R₉ C₁-C₈-Alkylen bedeutet,
und

- Y: Sauerstoff oder Schwefel bedeutet; ferner
- T: einen Rest der Formeln -R₉-Si(OR₃)_{3-q}(R₄)_{q} oder 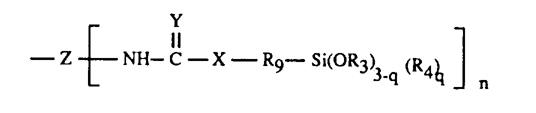 oder, falls R₇ einen Rest der Formel -R₉-Si(OR₃)_{3-q}(R₄)_{q} darstellt und m grösser oder gleich 2 ist, einen m-wertigen Rest Z bedeutet, worin R₃, R₄, R₉, Y und q die vorstehenden Bedeutungen haben,
- X: -S- oder -NH- ist und
- Z: ein organischer Rest ist, der sich von einem Polyisocyanat oder einem Polyisothiocyanat mit mindestens 2 NCO- bzw. NCS-Gruppen ableitet, und
- r: 1, 2 oder 3 und
- p: 0 oder 1 sind und
- m: Werte grösser oder gleich 1 und
- n: Werte grösser oder gleich 1 haben können.

Sind R₃, R₄, R₅, R₆ und R₇ C₁-C₄-Alkyl oder ist R₂ C₁-C₆-Alkyl, so handelt es sich dabei beispielsweise um Methyl, Ethyl, n-Propyl, Isopropyl, n-Butyl, Isobutyl und tert.-Butyl und bei R₂ zusätzlich um n-Pentyl oder n-Hexyl.

Die bevorzugte Bedeutung von R₃ und R₄ als Alkyl ist Methyl und Ethyl, insbesondere Methyl.

Bedeuten R₅ und R₆ Aryl, so handelt es sich z.B. um Phenyl oder Naphthyl, die unsubstituiert oder durch C₁-C₄-Alkyl, C₂-C₄-Alkenyl, insbesondere -CH=CH₂, C₁-C₄-Alkoxy, -NO₂ und Halogen, insbesondere Chlor oder Brom, substituiert sein können. Als Beispiele seien Methylphenyl, Ethylphenyl, Propylphenyl, Isopropylphenyl, Butylphenyl, Isobutylphenyl und tert.-Butylphenyl; Methoxyphenyl, Ethoxyphenyl und Butoxyphenyl; Nitrophenyl; Fluorphenyl, Chlorphenyl, Bromphenyl, Dichlorphenyl und Dibromphenyl und Styryl genannt.

Bedeuten R₅ und R₆ Heteroaryl, kommen insbesondere Heteroaromaten mit 5 oder 6 Ringgliedern und einem oder zwei N-, O- oder S-Atomen in Betracht, die gegebenfalls benzokondensiert sein können, wie beispielsweise pyridyl, Thienyl, Benzothienyl, Furyl, Pyrrolyl, Imidazolyl, Pyrazolyl, Pyrazinyl, Pyrimidinyl und Chinolyl.

Bedeuten R₁ C₂-C₃-Alkylen, zwei Reste R₃ zusammen C₁-C₄-Alkylen und R₉ C₁-C₈-Alkylen, so handelt es sich dabei um geradkettiges oder verzweigtes Alkylen, wobei das geradkettige Alkylen bevorzugt ist. Beispielsweise handelt es sich um Methylen, Ethylen, Propylen, Trimethylen, Tetramethylen, 2-Methyl-1,3-trimethylen für R₃ und R₉ und bei R₉ zusätzlich um Pentamethylen, 2-Methyl- 1,4-tetramethylen, 3-Propyl-1,3-trimethylen, 1,6-Hexamethylen, 1,7-Heptamethylen, 1,8-Octamethylen oder 2-Ethyl-1,2-hexamethylen, wobei für R₁ die Bedeutung auf Ethylen, Propylen und Trimethylen beschränkt ist.

Bevorzugt bedeutet R₉ C₁-C₄-Alkylen, insbesondere Trimethylen oder Ethylen.

Bedeutet R₂ C₂-C₆-Alkenyl, so handelt es sich dabei um geradkettiges oder verzweigtes Alkenyl, bevorzugt um geradkettiges Alkenyl, das eine oder mehrere, bevorzugt jedoch eine Doppelbindung enthält, wie beispielsweise Ethenyl (Vinyl), 2-Propenyl (Allyl), n-Butenyl, 1,3-Butadienyl, i-Pentenyl, n-Pentenyl oder n-Hexenyl.

Ist R₂ als C₁-C₆-Alkyl durch OH-, CN- oder -Si(OR₃)_{3-q}(R₄)_{q}-Gruppen substituiert, so kann es sich um eine einfache oder mehrfache Substitution handeln, wobei eine einfache Substitution bevorzugt ist. Die Substitution kann sich in jeder möglichen Position befinden, jedoch ist die terminale Position bevorzugt.

Bevorzugt bedeutet R₂ C₁-C₄-Alkyl, insbesondere Methyl.

Bevorzugt hat der Parameter p in Formel I den Wert 0.

Ebenfalls bevorzugt hat der Parameter q den Wert 0.

Der Rest Z leitet sich von einem Polyisocyanat oder Polyisothiocyanat mit mindestens 2 NCO- bzw. NCS-Gruppen ab. Diese erfindungsgemäss in Frage kommende NCO- bzw. NCS-Funktionalität grösser oder gleich 2 des Polyisocyanats bzw. Polyisothiocyanats wird dadurch erreicht, dass beispielsweise Polyamine, wie z.B. aminoterminierte Polyetherpolyole, durch Phosgenierung oder Thiophosgenierung zu Polyisocyanaten bzw. Polyisothiocyanaten mit einer Funktionalität grösser oder gleich 2 umgesetzt werden. Die so erhältlichen Polyisocyanate oder Polyisothiocyanate können entweder direkt eingesetzt werden oder zuerst mit Diolen, Polyolen, Dimercaptanen, Diaminen oder Polyaminen zu NCO- bzw. NCS-terminierten Präpolymeren umgesetzt werden. Ebenfalls können die auf nachstehende Weise erhältlichen Polyisocyanate so umgesetzt werden.

Eine weitere Möglichkeit, Polyisocyanate mit einer NCO-Funktionalität grösser gleich 2 herzustellen, besteht in der Oligomerisierung von Diiocyanaten. So können beispielsweise Diisocyanate, wie z.B. Hexamethylendiisocyanat, durch partielle Hydrolyse zu biuretgruppenhaltigen Produkten (z.B. Desmodur® N100 von Bayer) umgesetzt werden.

Weiter können Diisocyanate, wie z.B. Hexamethylendiisocyanat, partiell trimerisiert werden, so dass höher funktionelle Polyisocyanate entstehen, welche Isocyanurat-Ringe enthalten (z.B. Desmodur® N3200 von Bayer).

Eine Kettenverlängerung durch Umsetzung von Diisocyanaten mit polyfunktionellen H-aciden Verbindungen mit einer Funktionalität grösser oder gleich 2, wie z.B. Triole, Tetrole, Pentole, Triamine, Polyamine oder Polymercaptane, führt ebenfalls zu Polyisocyanaten mit einer NCO-Funktionalität grösser gleich 2. Dabei ist das NCO/OH-Verhältnis grösser 1, vorzugsweise jedoch grösser 3:1, insbesondere grösser 10:1.

Als Diisocyanate eignen sich sowohl aromatische als auch aliphatische, heterocyclische, monocyclische und polycyclische, bifunktionelle Isocyanatverbindungen. Beispiele für solche Verbindungen sind Toluylendiisocyanat, Diphenylmethandiisocyanat, Naphthylendiisocyanat, Xylylendiisocyanat, Hexamethylendiisocyanat, Trimethylhexamethylendiisocyanat, Isophorondiisocyanat oder Dicyclohexylmethandiisocyanat.

Die Parameter m und n besitzen zweckmässig unabhängig voneinander Werte von 1 bis 49, bevorzugt 1 bis 9, besonders bevorzugt 1 bis 5 und ganz speziell bevorzugt 1, 2 und 3. Die Summe n + m beträgt zweckmässig 2 bis 50, bevorzugt 2 bis 10, insbesondere 2 bis 6.

Der Rest Z weist vorzugsweise ein mittleres Molekulargewicht Mₙ kleiner als 10000, insbesondere Mₙ kleiner als 4000, auf.

Bevorzugt sind Verbindungen der Formel I, worin Y Sauerstoff darstellt.

Bevorzugte Verbindungen entsprechen der Formel I, worin Z von einem aliphatischen, cycloaliphatischen, aliphatisch/aromatischen, aromatischen oder heterocyclischen Polyisocyanat oder Polyisothiocyanat mit grösser oder gleich 2 NCO- oder NCS-Gruppen abgeleitet ist, wobei dieser Rest Z gegebenenfalls eine oder mehrere Ester-, Ether-, Urethan-, Thiourethan-, Isocyanurat-, Hamstoff- oder Biuret-Funktionen enthalten kann.

Besonders bevorzugte Verbindungen entsprechen der Formel I, worin Z von einem aliphatischen oder gemischt aliphatisch/aromatischen Polyisocyanat mit ≥ 2 NCO-Gruppen abgeleitet ist, wobei dieser Rest Z gegebenenfalls gesamthaft eine oder zwei Ester-, Ether-, Urethan-, Thiourethan-, Isocyanurat-, Hamstoff- oder Biuret-Funktionen enthält.

Besitzt Z in den Verbindungen der Formel I Ethersauerstoffatome, so kann es sich um Monoether oder Oligoether, wie z.B. eine Gruppe der Formel -(CH[CH₃]-CH₂-O)_{y}- oder -(CH₂-CH₂-CH₂-CH₂-O)_{y}- handeln, wobei y eine Zahl von 1 bis 80, vorzugsweise von 1 bis 20 bedeutet.

Sind im Rest Z in den Verbindungen der Formel I Urethan- oder Thiourethan-Gruppen enthalten, so handelt es sich um Derivate, welche durch Umsetzung von Polyolen mit Isocyanat- bzw. Isothiocyanat-Gruppen enthaltenden Verbindungen erhältlich sind. Es sind auch Reste darunter zu verstehen, welche sowohl eine oder mehrere Urethangruppen als auch eine oder mehrere Thiourethangruppen enthalten, etwa solche welche ein Brückenglied der Formel 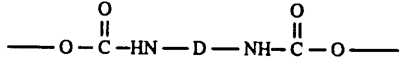 bzw. 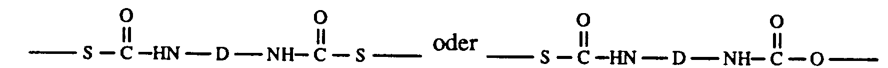 enthalten, wobei D den Rest des Polyols bedeutet.

Als Polyole können z.B. auch OH-terminierte Polyether oder Polyester eingesetzt werden.

Bevorzugte Verbindungen der Formel I enthalten im Rest Z zwei, besonders bevorzugte Verbindungen dagegen eine Ester-, Urethan-, Isocyanurat-, Harnstoff- oder Biuret-Funktionen. Dabei stellen die Etherfunktionen eine gewisse Ausnahme dar, da sie, wie oben gezeigt wurde, in der Lage sind, Oligoether-Brückenglieder zu bilden. Solche Verbindungen können daher bis zu 80, bevorzugt bis zu 20 Etherfunktionen enthalten.

Bevorzugt werden Verbindungen der Formel I, worin R₁ Propylen darstellt.

Insbesondere bevorzugt werden Verbindungen der Formel I, worin mindestens einer der Reste R₅ oder R₆ eine Gruppe der Formeln 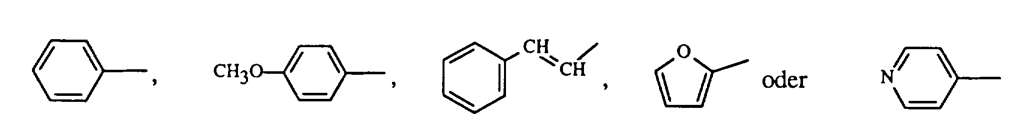 bedeutet.

Eine weitere bevorzugte Ausführungsform betrifft Verbindungen der Formel I, worin T einen Rest der Formeln -R₉-Si(OR₃)_{3-q}(R₄)_{q} oder 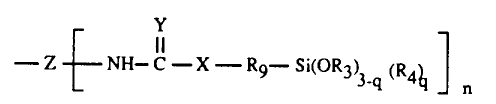 bedeutet, insbesondere diejenigen, worin mindestens ein Rest X -S- bedeutet.

Speziell bevorzugt sind Verbindungen der Formel I, worin p und q 0 sind, m 1 und n 2 sind, Y Sauerstoff, X -S-, R₁ und R₉ Propylen, R₂ und R₃ Methyl, R₅ Phenyl und R₆ Wasserstoff bedeuten.

Die Herstellung der Verbindungen der Formel I erfolgt nach an und für sich bekannten Verfahren und kann am einfachsten anhand der folgenden Reaktionsschemata illustriert werden.

### I. Aminal- bzw. Imin-Aminteil

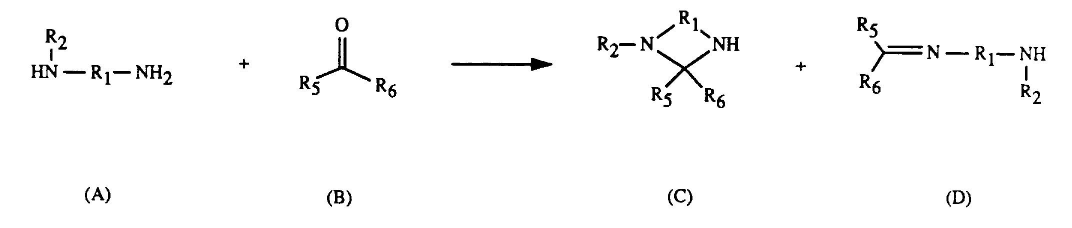

Diese Herstellung erfolgt z.B. nach der in der US-A 4,404,379 beschriebenen Weise. Die Edukte (A) und (B) sind bekannte Verbindungen, zum Teil im Handel erhältlich oder können auf einfache, bekannte Weise hergestellt werden. Als Edukte (A) eignen sich besonders 3-Methylaminopropylamin und 3-(2-Aminoethylamino)-propyltrimethoxysilan. Als Edukte (B) können z.B. die Carbonylverbindungen Benzaldehyd, 4-Pyridincarbaldehyd, Benzophenon, Zimtaldehyd, Furfural, p-Anisaldehyd oder auch Terephthalaldehyd in Frage kommen.

Durch Umsetzung von (C) mit geeigneten, reaktive Doppelbindungen enthaltenden Verbindungen, wie z.B. Acrylnitril, nach dem in der EP-A 70 536 beschriebenen Verfahren können Aminale der Formel (E) hergestellt werden:

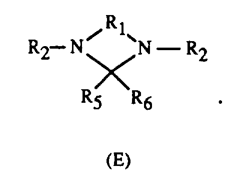

Die so hergestellten Aminale (C) und (E) können in einer weiteren Stufe mit einem Polyisocyanat Z-(NCO)ₙ oder einem Polyisothiocyanat Z-(NCS)ₙ umgesetzt werden, wobei n grösser oder gleich 2 ist.

### II. Silanteil

Die erfindungsgemäss verwendeten Amino- oder Mercapto-alkoxysilane sind an sich bekannte Verbindungen. Sie sind zum Teil im Handel erhältlich oder können nach an sich bekannten Methoden hergestellt werden. Verbindungen dieser Art sind in ausführlicher Weise beispielsweise in "Silane Coupling Agents" von E.P. Plueddemann, Plenum Press, New York (1982) beschrieben.

### III. Polyisocyanat Z-(NCO)_{≥2} oder Polythioisocyanat Z-(NCS)_{≥2}

Die Herstellung dieser Isocyanate erfolgt nach literaturbekannten Methoden wie sie z.B. in den US-A 3,492,330; 3,394,164 und 3,567,763; in den DE-A 19 29 034 und 20 04 048; in den DE-Patentschriften 10 22 789; 12 22 067; 11 01 394; 10 27 394 und 12 31688; in den GB-Patentschriften 994,890; 889,050; 956,474 und 1,072,956 oder in der BE-Patentschrift 723,640 beschrieben werden.

Die Polyisothiocyanate können analog hergestellt werden. Anstelle von Diisocyanaten werden die entsprechenden Diisothiocyanate als Edukte eingesetzt. Aliphatische Edukte können nach den in der US-A 3,787,472 beschriebenen Methoden hergestellt werden und aromatische Edukte nach den in "Org. Syntheses"; Collective Volume 1, S. 447 John Wiley, New York, (1948) beschriebenen Methoden.

### IV. Umsetzung der Polyisocyanate gemäss obigem Verfahren III mit den Aminalen (C) und/oder (E) sowie mit den Silanen gemäss Verfahren II zu den Verbindungen der Formel I.

Die Umsetzung der Polyisocyanate bzw. Polyisothiocyanate mit den anderen beiden Komponenten kann nacheinander oder miteinander erfolgen. Bei stufenweiser Umsetzung kann zuerst die Aminalverbindung mit dem Polyisocyanat bzw. Polyisothiocyanat umgesetzt werden und anschliessend das Addukt mit dem Alkoxysilan oder umgekehrt. Dabei ist es auch möglich, verschiedene Aminal- bzw. Silan-Komponenten an das Polyisocyanat bzw. -thiocyanat zu addieren, wobei es möglich ist, die verschiedenen Komponenten alternierend umzusetzen, d.h. z.B. zuerst Addition eines Silans, dann Aminaladdition und schliesslich Addition des zweiten Silans.

Die Umsetzung kann ohne Lösungsmittel erfolgen, in der Regel jedoch werden eine oder alle Komponenten durch ein geeignetes inertes Lösungsmittel, beispielsweise Xylol, verdünnt, um z.B. die Viskosität den Erfordemissen anzupassen.

Die Addition selbst erfolgt zweckmässig bei Temperaturen zwischen 15 °C und 200 °C, bevorzugt aber bei Temperaturen zwischen 30 °C und 140 °C.

Der Reaktionsverlauf kann durch Infrarotspektroskopie oder Titration verfolgt werden.

Bei den Additionsreaktionen können auch Katalysatoren der an sich bekannten Artmitverwendet werden, wie z.B. tertiäre Amine wie beispielsweise Triethylamin, N-Methyl-morpholin, N,N,N′,N′-Tetramethyl-ethylendiamin oder 1,4-Diaza-bicyclo-(2,2,2)-octan. Auch organische Metallverbindungen, insbesondere organische Zinnverbindungen, können als Katalysatoren verwendet werden.

Beispiele für organische Zinnverbindungen sind Zinn(II)-salze von Carbonsäuren, wie z.B. Zinn(II)-acetat, Zinn(II)-octoat und Zinn(II)-laurat, oder die Dialkylzinnsalze von Carbonsäuren, wie z.B. Dibutylzinn-diacetat, Dibutylzinn-dilaurat oder Dioctyl-zinndiacetat.

Die stöchiometrischen Verhältnisse bei der Addition der Aminal- und Silan-Komponenten an die Polyisocyanate bzw. -thiocyanate werden so gehalten, dass das Verhältnis von NH-Gruppen der Aminale und der NH₂- bzw. SH-Gruppen der Silane ungefähr äquimolar zu den NCO- bzw. NCS-Gruppen der Polyisocyanate bzw. -thiocyanate ist. Dabei kann das Addukt noch freie NCO- bzw. NCS-Gruppen enthalten. Vorzugsweise ist jedoch keine freie NCO- bzw. NCS-Gruppe vorhanden.

Mit dem stöchiometrischen Verhältnis der Edukte bei der Additionsreaktion lässt sich das Verhältnis Aminal- bzw. Hamstoff1minreste zu Silanreste in den erfindungsgemässen Verbindungen der Formel I steuern. Dazu werden vorzugsweise die Aminal- bzw. die Silanverbindung in getrennten Schritten mit dem Polyisocyanat bzw. -thiocyanat umgesetzt. Die erste Stufe erfolgt in der Regel bei einem Verhältnis von NH- oder SH-Gruppen zu NCO- bzw. NCS-Gruppen von kleiner als 1. Das bevorzugte Aminal-NH/NCO- bzw. NCS-Verhältnis liegt zwischen 1:2 bis 1:6, insbesondere zwischen 1:3 und 1:5. Das bevorzugte Verhältnis von Silan-NH₂/NCO- bzw. Silan-SH/NCO- bzw. NCS-Gruppen liegt zwischen 2:3 und 1:5, insbesondere zwischen 2:3 und 1:2.

In der zweiten Stufe werden in der Regel die restlichen freien NCO- bzw. NCS-Gruppen mit den Aminal-NH- bzw. Silan-NH₂- oder -SH-Gruppen abreagiert. Dazu ist das stöchiometrische Verhältnis der H-aciden Gruppen zu NCO- bzw. NCS-Gruppen grösser oder gleich 1, bevorzugt 4:1 bis 1:1, insbesondere 2:1 bis 1:1.

Es ist jedoch auch möglich, in der zweiten Stufe die restlichen freien NCO- bzw. NCS-Gruppen nur partiell abzureagieren. Dann gelten die gleichen stöchiometrischen Verhältnisse wie bei der ersten Additionsstufe. Ein solches Vorgehen wird bevorzugt angewendet, wenn zwei oder mehr verschiedene Aminal- bzw. Silanverbindungen addiert werden.

Die erfindungsgemässen Verbindungen können in Substraten, wie z.B. in Polyurethanharzen, als Haftvermittler eingesetzt werden. Besonders wirkungsvoll ist ihr Einsatz in feuchtigkeitshärtenden Polyurethanharzen, welche als Klebstoffe, Dichtungsmassen, Lacke oder Isolierstoffe zur Anwendung kommen. Handelt es sich um Klebstoffe, so besitzen die erfindungsgemässen Verbindungen Eigenschaften, welche ihren Einsatz in Zweikomponenten- und ganz besonders in Einkomponentensystemen ermöglichen. Der Einsatz der erfindungsgemässen Verbindungen als Haftvermittler in den genannten Substraten macht eine Vorbehandlung der zu verklebenden Oberflächen mit einem Primer überflüssig. Als Anwendungsbeispiele sei das Verkleben von Windschutzscheiben und Scheinwerfern im Automobilbau erwähnt. Verbindungen der Formel I mit m grösser oder gleich 2 können ausserdem als feuchtigkeitsaktivierte Härter für die genannten Substrate eingesetzt werden. Ferner können Verbindungen der Formel I als Primer zur Substratvorbehandlung eingesetzt werden.

Handelt es sich beim Substrat um ein feuchtigkeitshärtendes Polyurethan, so enthält dieses als Hauptbestandteil mehrfunktionelle Isocyanate und/oder Polyurethan-Präpolymere. Geeignet sind hier sowohl aromatische als auch aliphatische, monocyclische wie polycyclische, mehrfunktionelle Isocyanatverbindungen. So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen grösser als 2. Ein weiteres geeignetes aliphatisches Diisocyanat ist Xylylendiisocyanat. Darüber hinaus kann eine Vielzahl aliphatischer Isocyanate der Funktionalität 2 und höher eingesetzt werden. Beispiele sind hier Isophorondiisocyanat und Dicyclohexylmethandiisocyanat als cyclische aliphatische Diisocyanate. Weitere Beispiele sind aliphatische, geradkettige Diisocyanate, wie sie durch Phosgenierung von Diaminen gewonnen werden, z.B. Tetramethylendiisocyanat oder Hexamethylendiisocyanat.

Nach einer bevorzugten Ausführungsform der Erfindung werden anstatt der mehrfunktionellen Isocyanatverbindungen Polyurethan-Präpolymere eingesetzt. Unter Präpolymeren werden hier die Addukte eines Ueberschusses mehrfunktioneller Isocyanate an mehrfunktiorielle Alkohole, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umsetzungsprodukte von Diisocyanaten mit Polyetherpolyolen, z.B. Polyetherpolyolen auf Basis Polyethylenoxid oder auf Basis Polypropylenoxid, können als Präpolymere verwendet werden. Bevorzugt sind Polyurethan-Präpolymere auf Basis von Polyetherpolyolen mit Molekulargewichten zwischen 200 und 10000 , insbesondere 500 und 3000. Dem Polyurethan-Fachmann sind eine grosse Anzahl derartiger Polyetherpolyole bekannt; sie werden von zahlreichen Herstellern angeboten und über ihr Molekulargewicht (Zahlenmittel), das aus Endgruppenbestimmungen errechenbar ist, charakterisiert. Weitere geeignete Polyetherpolyole sind Polyetherpolyole auf Basis Polytetrahydrofuran.

Anstelle von Polyetherpolyolen können auch Polyesterpolyole eingesetzt werden. Geeignete Polyesterpolyole sind Umsetzungsprodukte mehrfunktioneller Säuren mit mehrfunktionellen Alkoholen, beispielsweise Polyester auf Basis aliphatischer und/oder aromatischer Dicarbonsäuren und mehrfunktioneller Alkohole der Funktionalität 2-4. So können Polyester aus Adipinsäure, Sebacinsäure, Phthalsäure, Hydrophthalsäure und/oder Trimellitsäure einerseits und Ethylenglykol, Propylenglykol, Neopentylglykol, Hexanglykol, Glycerin und/oder Trimethylolpropan andererseits eingesetzt werden. Geeignet sind insbesondere Polyesterpolyole mit Molekulargewicht (Zahlenmittel) zwischen 500 und 5000, insbesondere zwischen 600 und 2000. Weitere geeignete Polyesterpolyole sind die Umsetzungsprodukte von Caprolacton mit Alkoholen der Funktionalität von 2-4, so beispielsweise das Additionsprodukt von 1-5 Mol Caprolacton an 1 Mol Ethylenglykol, Propylenglykol, Glycerin und/oder Trimethylolpropan.

Eine weitere geeignete Klasse mehrfunktioneller Alkohole sind Polybutadienole. Hierbei handelt es sich um Oligomere auf Basis Butadien, die als Endgruppen OH-Gruppen aufweisen. Geeignet sind hier Produkte im Molekulargewichtsbereich 200-4000, insbesondere 500-3000. Ferner sind Siloxanpräpolymere, vorzugsweise in Kombination mit andern Präpolymeren, geeignet.

Bei der Herstellung der Polyurethan-Präpolymeren ist das Verhältnis von OH-Gruppen der Alkoholkomponente zu Isocyanatgruppen von Bedeutung. Dieses liegt im allgemeinen zwischen 1:2 und 1:10. Dabei werden mit höheren Isocyanatüberschüssen eher niedrigviskose Polyurethan-Präpolymere erhalten, während niedere Isocyanatüberschüsse hochviskose, meist nur noch spachtelbare Zubereitungen liefern.

Es ist dem Polyurethan-Fachmann bekannt, dass die Vernetzungsdichte und damit die Härte der Polyurethane mit der Funktionalität der Isocyanatkomponente oder auch des Polyols zunimmt. Es sei hier auf die allgemeine Fachliteratur verwiesen, z.B. auf die Monographie von Saunders und Frisch "Polyurethanes, Chemistry and Technology", Band XVI der Serie High Polymers "Interscience Publishers" New York-London, Teil I (1962) und Teil II (1964).

Die erfindungsgemässen Polyurethanzubereitungen können weiterhin verschiedene Hilfsstoffe enthalten. Verwendet werden können hier z.B. Füllstoffe. Als Füllstoffe geeignet sind gegenüber Isocyanaten nicht-reaktive, anorganische Verbindungen, wie z.B. Kreide oder Kalkmehl, gefällte und/oder pyrogene Kieselsäuren, Zeolithe, Bentonite, gemahlene Mineralien sowie andere dem auf dem Arbeitsgebiet tätigen Fachmann bekannte anorganische Füllstoffe, insbesondere Faserkurzschnitte, und anderes. Für manche Anwendungen sind Füllstoffe bevorzugt, die den Zubereitungen Thixotropie verleihen, so beispielsweise quellbare Kunststoffe insbesondere PVC.

Ausser den genannten Verbindungen können die erfindungsgemässen Polyurethanzubereitungen noch weitere Hilfsstoffe, beispielsweise Lösungsmittel enthalten. Geeignet sind Lösungsmittel, die ihrerseits nicht mit Isocyanatgruppen reagieren, so z.B. halogenierte Kohlenwasserstoffe, Ester, Ketone und aromatische Kohlenwasserstoffe. Auch Weichmacher, Verzögerer, Farbstoffe und Alterungsschutzmittel, wie sie in Polyurethan-Klebstoffen und Dichtungsmassen bekannt sind, können mit eingearbeitet werden.

Für manche Anwendung ist es wünschenswert, den erfindungsgemässen Polyurethanzubereitungen Schaumstabilisatoren zuzusetzen. Als Schaumstabilisatoren können sogenannte Silikotenside verwendet werden. Darunter versteht man Blockcopolymere, die aus einem Polysiloxanblock und einem oder mehreren Polyoxyethylen- und/oder Polyoxypropylenblöcken aufgebaut sind. Die erfindungsgemässen Polyurethanzubereitungen können weiterhin flammhemmende und weichmachende Zusätze enthalten. Gängig sind Phosphorund/oder Halogenatome enthaltende Verbindungen, wie Trikresylphosphat, Diphenylkresylphosphat, Tris-2-chlor-ethylphosphat, Tris-2-chlorpropylphosphat und Tris-2,3-dibrompropylphosphat. Zusätzlich können Flammschutzmittel verwendet werden, z.B. Chlorparaffine, Phosphinsäurehalogenide, Ammoniumphosphat und halogen- und phosphorhaltige Harze. Als weitere Zusätze sind für manche Anwendungen Weichmacher von Bedeutung.

Geeignet sind hier beispielsweise Ester der Phthalsäure oder Ester langkettiger Dicarbonsäuren, beispielsweise Sebacinsäure- oder Azelainsäureester. Auch sogenannte Epoxidweichmacher, z.B. epoxydierte Fettsäurederivate, können hier eingesetzt werden.

Weitere mögliche Zusätze sind basische Beschleuniger. Basische Beschleuniger sind beispielsweise tertiäre Basen wie Bis-(N,N'-dimethylamino)-diethylether, Dimethylamino-cyclohexan, N,N-Dimethyl-benzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxyethyl)-amin und Dicarbonsäuren. Ein weiterer wichtiger Beschleuniger ist 1,4-Diamino-bicyclo-(2.2.2)-octan. Ferner können nicht-basische Substanzen als Beschleuniger verwendet werden. Hier seien Metallverbindungen genannt, beispielsweise Eisenacetylacetonat sowie Zinn-(II)-2-ethylhexoat, Dibutylzinndilaurat oder Molybdänglykolat.

Zu den Polyurethanharzen werden die Verbindungen der Formel I in Mengen von 0,1-20 Gew.%, bevorzugt 0,5-15 Gew.%, insbesondere 2,5-10 Gew.%, bezogen auf das Präpolymer, gegeben.

Ferner können die Verbindungen der Formel I auch als Härter verwendet werden. Werden sie als Härter eingesetzt, so soll das Molverhältnis von freigesetzten sekundären NH-Gruppen zu freien Isocyanatgruppen im Harz 0,5 bis 1,5:1; vorzugsweise 0,9 bis 1,1:1 betragen.

Die folgenden Beispiele erläutern die Erfindung.

### I. Herstellung der Ausgangsmaterialien

### Beispiel A: 1,4-Bis-(1-methyl-hexahydropyrimidin-2-yl)-benzol

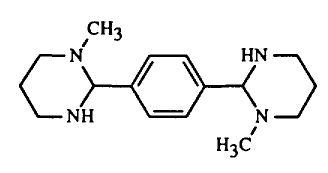

In einem 1 l Sulfierkolben mit Rührer, Rückflusskühler, Thermometer und Wasserabscheider werden 1 Mol Terephthalaldehyd in 500 ml Toluol vorgelegt. Anschliessend wird in äquimolarer Menge 3-Methylaminopropylamin langsam unter Stickstoff zugetropft, gefolgt von 0,1 Gew.% Toluolsulfonsäure als Katalysator. Dann wird einige Zeit unter Rückfluss erhitzt, wobei das Reaktionsausmass durch die Menge an abgeschiedenem Wasser verfolgt werden kann. Anschliessend wird das Reaktionsgemisch im Rotationsverdampfer eingeengt und das Produkt dann unter Hochvakuum aufgearbeitet.
Ausbeute: 87 %
Schmelzpunkt: 135 °C

| | | | | |
|---|---|---|---|---|
| Elementaranalyse: | ber.: | C 70,03 %; | H 9,55 %; | N 20,42 % |
| | gef.: | C 69,95 %; | H 9,74 %, | N 20,62 % |

### Beispiel B: 1 -Methyl-2-phenyl-hexahydropyrimidin

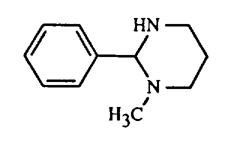

Es wird gemäss Beispiel A verfahren, wobei anstelle des Terephthalaldehyd 1 Mol Benzaldehyd eingesetzt wird.
Ausbeute: 91 %
Siedepunkt: 75 °C/0,1 mbar

| | | | | |
|---|---|---|---|---|
| Elementaranalyse: | ber.: | C 74,96 %; | H 9,15 %; | N 15,89 % |
| | gef.: | C 74,94 %; | H 9,10 %, | N 15,99 % |

### Beispiel C: 1-Methyl-2,2-diphenyl-hexahydropyrimidin

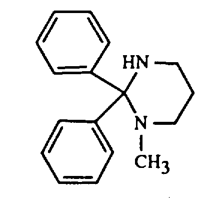

Es wird gemäss Beispiel A verfahren, wobei anstelle des Terephthalaldehyd 1 Mol Benzophenon eingesetzt wird.
Ausbeute: 39 %
Siedepunkt: 130 °C/0,1 mbar

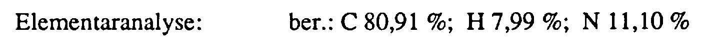

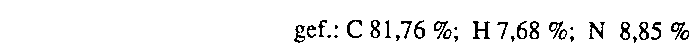

### Beispiel D: 1-Methyl-2-pyridin-4-yl-hexahydropyrimidin

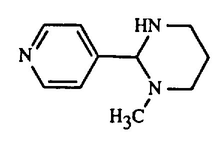

Es wird gemäss Beispiel A verfahren, wobei anstelle des Terephthalaldehyd 1 Mol 4-Pyridincarbaldehyd eingesetzt wird.
Ausbeute: 46 %
Siedepunkt: 70 °C/0,05 mbar

| | | | | |
|---|---|---|---|---|
| Elementaranalyse: | ber.: | C 67,76 %; | H 8,53 %; | N 23,71 % |
| | gef.: | C 67,69 %; | H 8,73 %, | N 23,81 % |

### Beispiel E: 1-Methyl-2-(2-phenylethenyl)-hexahydropyrimidin

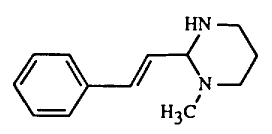

Es wird gemäss Beispiel A verfahren, wobei anstelle des Terephthalaldehyd 1 Mol Zimtaldehyd eingesetzt wird.
Ausbeute: 28 %
Siedepunkt: 85 °C/0,17 mbar

| | | | | |
|---|---|---|---|---|
| Elementaranalyse: | ber.: | C 77,18 %; | H 8,97 %; | N 13,85 % |
| | gef.: | C 73,27 %; | H 9,80 %, | N 17,00 % |

### Beispiel F: 1-Methyl-2-furan-2-yl-hexahydropyrimidin

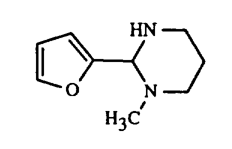

Es wird gemäss Beispiel A verfahren, wobei anstelle des Terephthalaldehyd 1 Mol
Furfural eingesetzt wird.
Ausbeute: 75 %
Siedepunkt: 110 °C/0,12 mbar

| | | | | |
|---|---|---|---|---|
| Elementaranalyse: | ber.: | C 65,03 %; | H 8,49 %; | N 16,85 % |
| | gef.: | C 64,88 %; | H 8,51 %, | N 16,84 % |

### Beispiel G: 1-Methyl-2-(4-methoxyphenyl)-hexahydropyrimidin

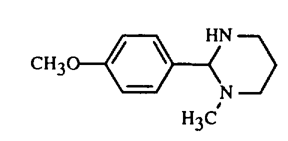

Es wird gemäss Beispiel A verfahren, wobei anstelle des Terephthalaldehyd 1 Mol p-Anisaldehyd eingesetzt wird.
Ausbeute: 78 %
Siedepunkt: 97 °C/0,04 mbar

| | | | | |
|---|---|---|---|---|
| Elementaranalyse: | ber.: | C 69,87 %; | H 8,80 %; | N 13,58 % |
| | gef.: | C 69,55 %; | H 8,81 %, | N 13,59 % |

### II. Synthese der Haftvermittler

### Beispiel 1:

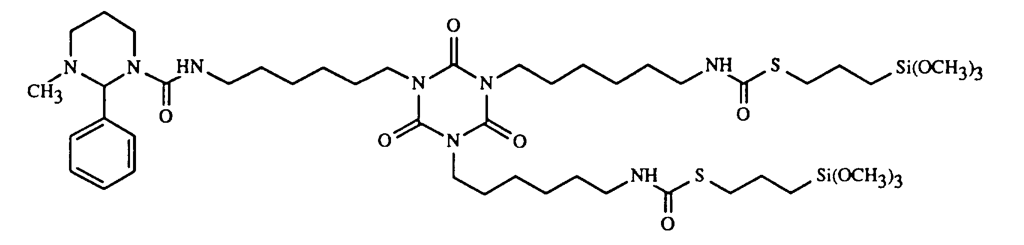

und

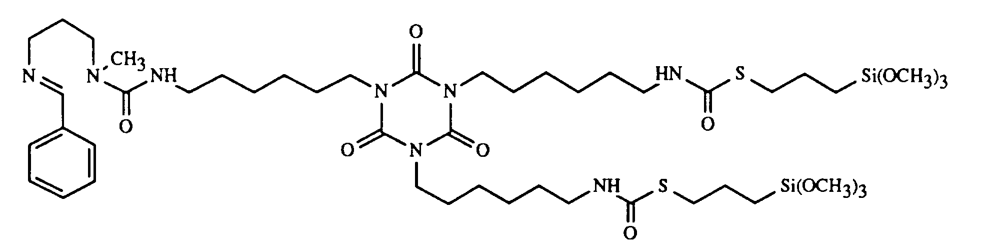

In einem 100 ml Sulfierkolben werden 20 g (0,1032 mol -NCO) partiell trimerisiertes Hexamethylendiisocyanat mit einem Isocyanatgehalt von 21,6 % (Desmodur® N 3200 der Firma Bayer AG) in 20 g Xylol gelöst und auf 80 °C erwärmt. Mittels eines Tropftrichters werden dann 13,51 g (0,0688 mol) 3-Mercaptopropyl-trimethoxysilan tropfenweise unter Stickstoff zugegeben und anschliessend 1,5 Stunden bei 80 °C, gefolgt von 2,5 Stunden bei 130 °C weitergerührt. Nach dem Abkühlen auf Raumtemperatur werden 0,03441 mol Aminal gemäss Beispiel B so zugetropft, dass die Temperatur stets unter 30 °C verbleibt. Anschliessend wird noch 4 Stunden bei Raumtemperatur gerührt und dann der Gehalt an freiem -NCO durch Titration kontrolliert.
Viskosität (nach Epprecht): η = 76 800 mPa˙s
mittleres Molekulargewicht (GPC, Polystyrol-Eichung):
Mₙ = 1 680 g/mol
M_{w} = 2 640 g/mol

| | | | | |
|---|---|---|---|---|
| Elementaranalyse: | gef.: | C 56,40 %; | H 8,34 %; | N 10,26 % |

Verhältnis Imin/Aminal (%, ¹H-NMR Analyse [N-CH₃]): 61/39
Isocyanatgruppengehalt: < 0,1 %

### Beispiel 2:

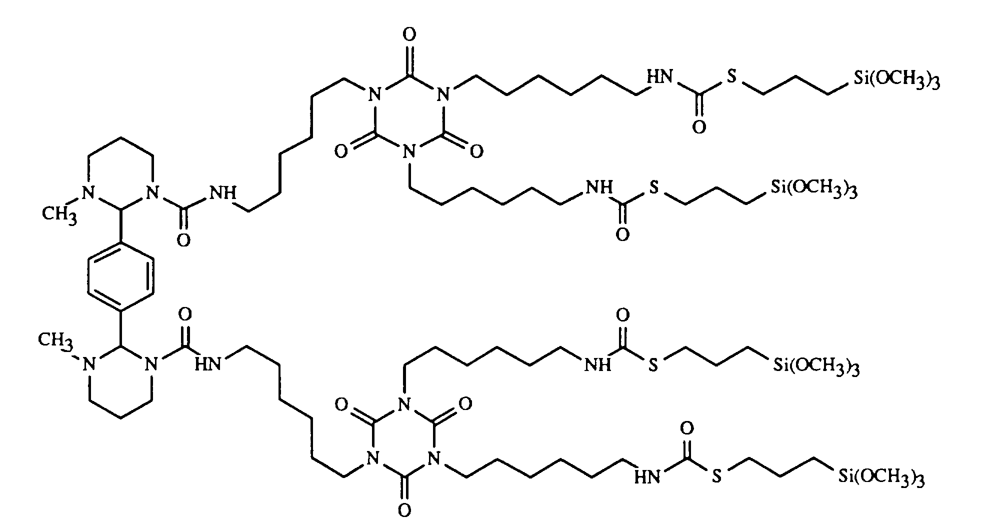

und

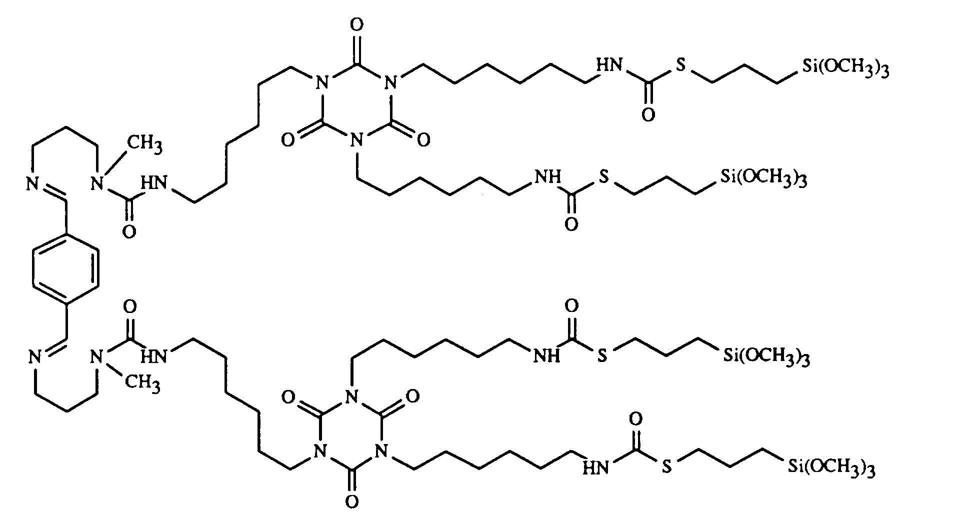

Es wird gemäss Beispiel 1 verfahren, wobei anstelle des Aminals aus Beispiel B das Aminal aus Beispiel A eingesetzt wird.
Viskosität (nach Epprecht): η > 100 000 mPa˙s
mittleres Molekulargewicht (GPC, Polystyrol-Eichung):
Mₙ =1780 g/mol
M_{w} = 4 640 g/mol

| | | | | |
|---|---|---|---|---|
| Elementaranalyse: | gef.: | C 53,33 %; | H 7,93 %; | N 7,42 % |

Verhältnis Imin/Aminal (%, ¹H-NMR Analyse [N-CH₃]): 69/31
Isocyanatgruppengehalt: < 0,1 %

### Beispiel 3:

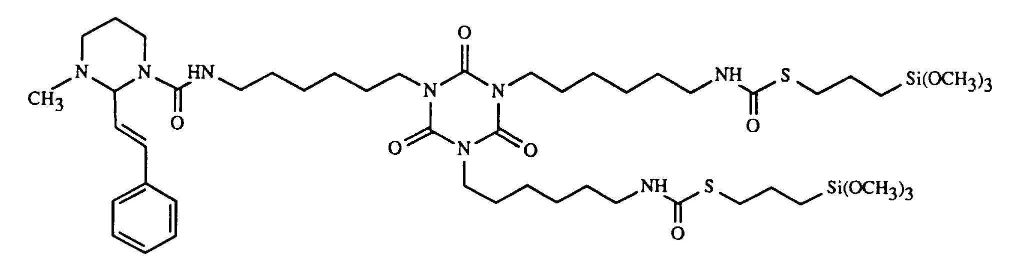

und

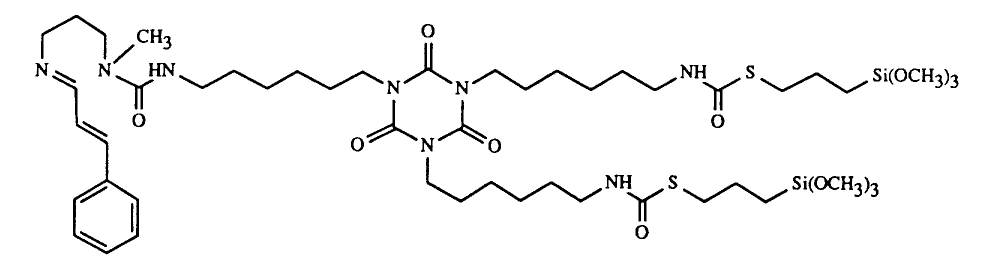

Es wird gemäss Beispiel 1 verfahren, wobei anstelle des Aminals aus Beispiel B das Aminal aus Beispiel E eingesetzt wird.
Viskosität (nach Epprecht): η = 12 000 mPa˙s
mittleres Molekulargewicht (GPC, Polystyrol-Eichung):
Mₙ = 1 480 g/mol
M_{w} = 2 320 g/mol

| | | | | |
|---|---|---|---|---|
| Elementaranalyse: | gef.: | C 61,80 %; | H 8,44 %; | N 8,62 % |

Verhältnis Imin/Aminal (%, ¹H-NMR Analyse [N-CH₃]): 61/39
Isocyanatgruppengehalt: < 0,1 %

### Beispiel 4:

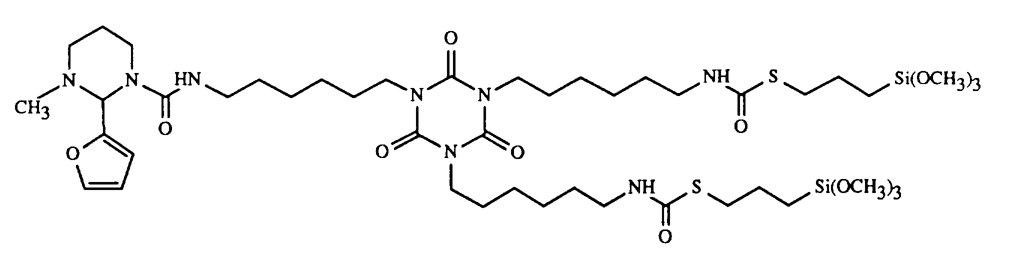

und

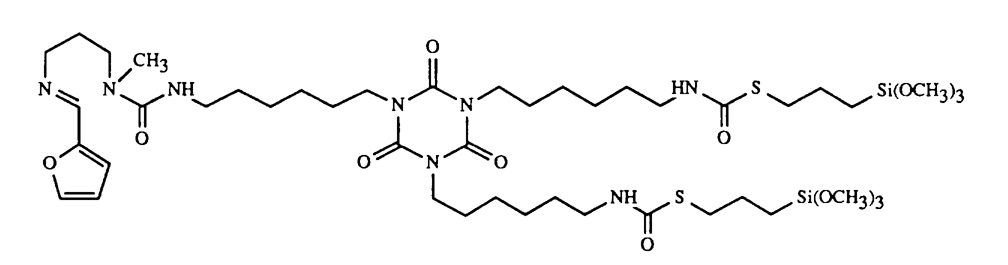

Es wird gemäss Beispiel 1 verfahren, wobei anstelle des Aminals aus Beispiel B das Aminal aus Beispiel F eingesetzt wird.
Viskosität (nach Epprecht): η = 9 600 mPa˙s
mittleres Molekulargewicht (GPC, Polystyrol-Eichung):
Mₙ =1 650 g/mol
M_{w} = 2 970 g/mol

| | | | | |
|---|---|---|---|---|
| Elementaranalyse: | gef.: | C 59,25 %; | H 8,27 %; | N 8,50 % |

Verhältnis Imin/Aminal (%, ¹H-NMR Analyse [N-CH₃]): 68/32
Isocyanatgruppengehalt: < 0,1 %

### Beispiel 5:

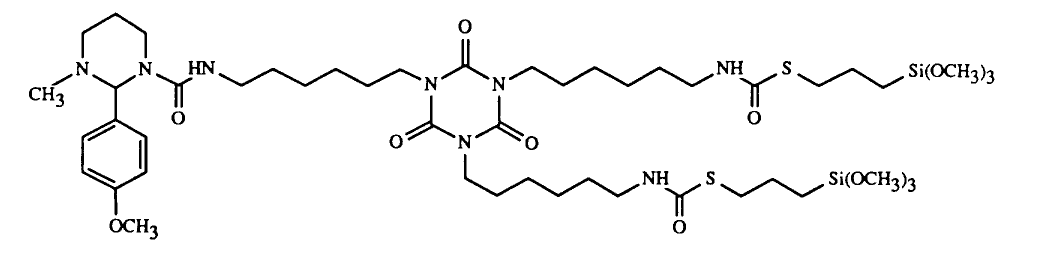

und

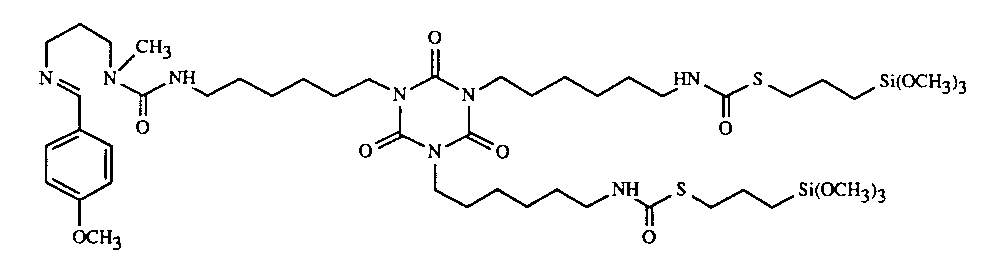

Es wird gemäss Beispiel 1 verfahren, wobei anstelle des Aminals aus Beispiel B das Aminal aus Beispiel G eingesetzt wird.
Viskosität (nach Epprecht): η = 4 800 mPa˙s
mittleres Molekulargewicht (GPC, Polystyrol-Eichung):
Mₙ = 2 120 g/mol
M_{w} = 4 970 g/mol

| | | | | |
|---|---|---|---|---|
| Elementaranalyse: | gef.: | C 59,60 %; | H 7,92 %; | N 6,59 % |

Verhältnis Imin/Aminal (%, ¹H-NMR Analyse [N-CH₃]): 68/32
Isocyanatgruppengehalt: < 0,1 %

### Beispiel 6:

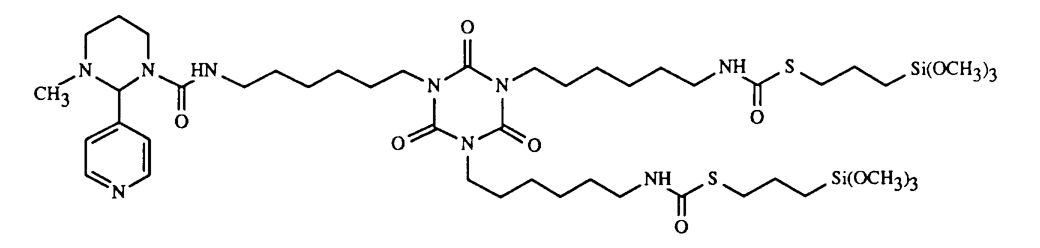

und

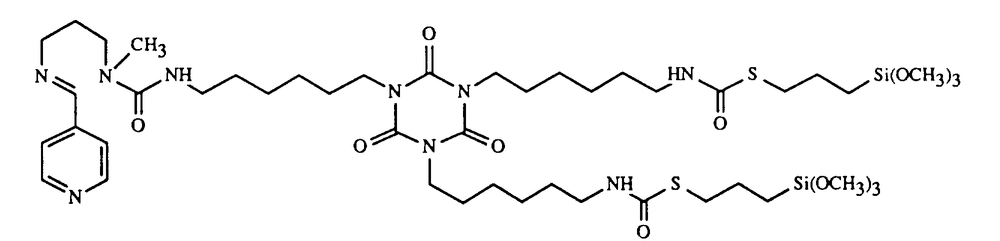

Es wird gemäss Beispiel 1 verfahren, wobei anstelle des Aminals aus Beispiel B das Aminal aus Beispiel D eingesetzt wird.
Viskosität (nach Epprecht): η = 38 400 mPa˙s
mittleres Molekulargewicht (GPC, Polystyrol-Eichung):
Mₙ = 1 140 g/mol
M_{w} = 1 660 g/mol

| | | | | |
|---|---|---|---|---|
| Elementaranalyse: | gef.: | C 55,92 %; | H 8,43 %; | N 10,97 % |

Verhältnis Imin/Aminal (%, ¹H-NMR Analyse [N-CH₃]): 57/43
Isocyanatgruppengehalt: < 0,1 %

### Beispiel 7:

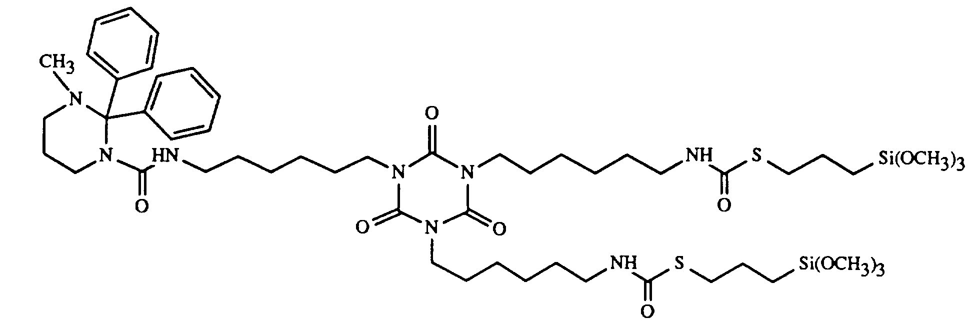

und

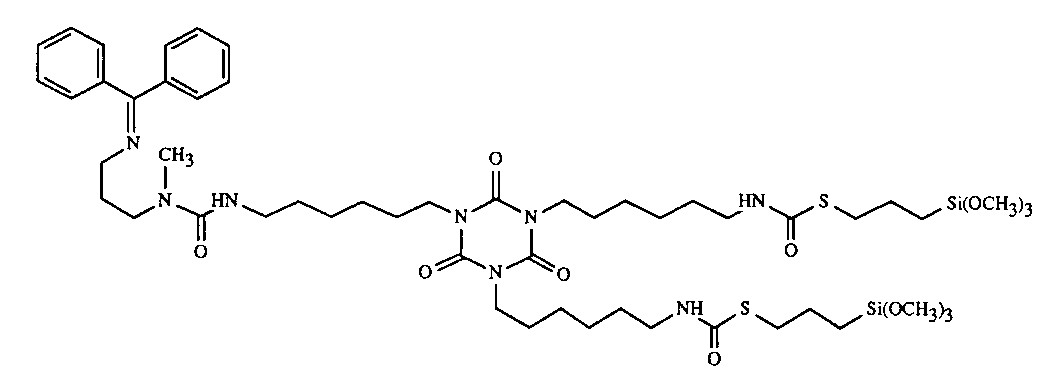

Es wird gemäss Beispiel 1 verfahren, wobei anstelle des Aminals aus Beispiel B das Aminal aus Beispiel C eingesetzt wird.
Viskosität (nach Epprecht): η = 1 960 mPa˙s
mittleres Molekulargewicht (GPC, Polystyrol-Eichung):
Mₙ = 1 080 g/mol
M_{w} = 2 460 g/mol

| | | | | |
|---|---|---|---|---|
| Elementaranalyse: | gef.: | C 63,90 %; | H 8,21 %; | N 7,47 % |

Verhältnis Imin/Aminal (%, ¹H-NMR Analyse [N-CH₃]): 61/39
Isocyanatgruppengehalt: < 0,1 %

### III. Klebstoff-Formulierungen

### Beispiel 8: Ein-Komponenten-System (feuchthärtend)

### 8A) Präpolymer-Synthese:

Ein Isocyanat terminiertes Präpolymer wird hergestellt, indem bei 80 °C zu 50 g Methylendiphenyldiisocyanat (Isonate® M 125 der Firma Upjohn) innerhalb 1 Stunde ein Gemisch aus 240 g trockenem bishydroxylterminiertem Polypropylenglykol mit dem Molekulargewicht 2000 (Desmophen® 1900 U der Firma Bayer AG) und 0,3 ml Dibutylzinnlaurat zugegeben wird. Anschliessend wird das erhaltene Gemisch mit 1,0 g Trimethylolpropan versetzt und weitere 2 Stunden bei 80 °C gerührt, bis sich ein isocyanatterminiertes Präpolymer mit einem Isocyanatgehalt von 2,0 % gebildet hat.

### 8B) Formulierung:

Die Klebstoff-Formulierung setzt sich wie folgt zusammen:

| | |
|---|---|
| 55,1 Gew.% | Präpolymer gemäss Beispiel 8A |
| 20 Gew.% | Flammruss, gemahlen |
| 14,9 Gew.% | Dioctylphthalat |
| 5 Gew.% | Kieselsäure-Aerogel (Thixotropiemittel) |
| 5 Gew.% | Haftvermittler gemäss Beispiel 1 |

### 8C) Haftung auf verschiedenen Substraten:

Die unter 8B) erhaltenen Klebstoff-Formulierung werden auf ein Substrat (gemäss nachstehender Tabelle) gegossen, so dass eine 5 mm dicke Polyurethanschicht entsteht. Nach 2 Wochen Lagerung an der Luft werden diese Proben 2 Wochen in Wasser bei Raumtemperatur gelagert. Die Ergebnisse sind in Tabelle 1 zusammengestellt, wobei (--) bedeutet, dass die Schicht leicht abgezogen werden kann und die Substratoberfläche sauber bleibt; (-) bedeutet, dass die Schicht mit Mühe abgezogen werden kann und die Substratoberfläche sauber bleibt; (+/-) bedeutet, dass der grösste Teil der Schicht auf der Substratoberfläche durch Kratzen mit einem Messer entfernt werden kann; (+) bedeutet, dass der grösste Teil der Schicht trotz Kratzen mit einem Messer auf der Substratoberfläche haften bleibt; (++) bedeutet, dass die ganze Schicht trotz Kratzen mit einem Messer auf der Substratoberfläche haften bleibt.

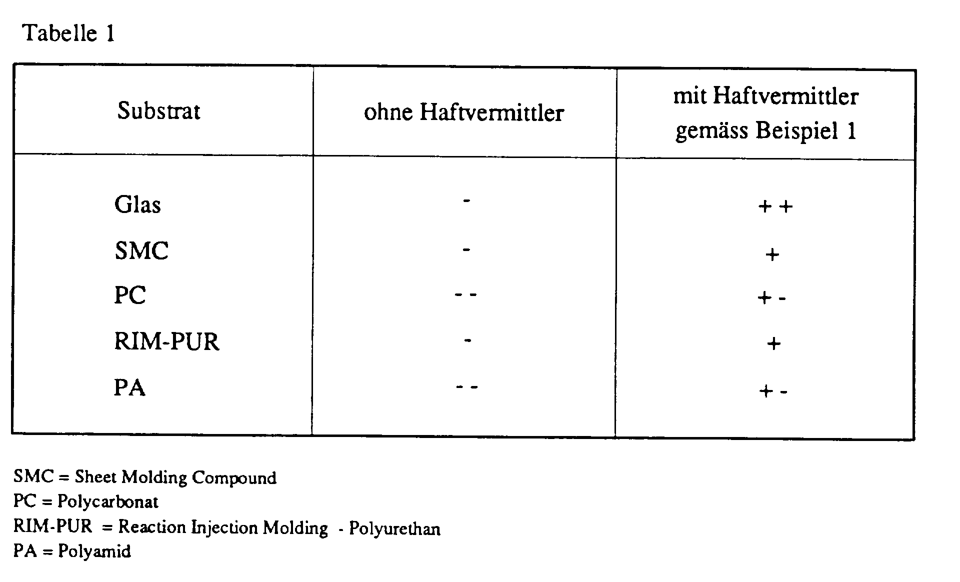

### Beispiel 9: Zwei-Komponenten-System (heisshärtend)

### 9A) Formulierung:

Die Klebstoff-Formulierung setzt sich wie folgt zusammen:

| | |
|---|---|
| 100 Gewichtsteile | Polyol, bestehend im wesentlichen aus verzweigten Polyetherpolyolen und mineralischen Füllstoffen |
| 20 Gewichtsteile | Isocyanat auf der Basis von Diphenylmethandiisocyanat |
| 5 Gewichtsteile | Haftvermittler gemäss Beispiel 1 |

### 9B) Mechanische Eigenschaften

Es werden die Zugscherfestigkeiten verschiedener Proben bestimmt.

| | | |
|---|---|---|
| Prüfkörper: | Substratdicke | 3,0 mm |
| | Breite | 25,0 mm |
| | Überlappung | 12,5 mm |
| | Dicke der Klebfuge | 0,2 mm |

Die Aushärtung der Proben erfolgt über 1 Stunde bei 80 °C. Die Ergebnisse sind in Tabelle 2 zusammengefasst.

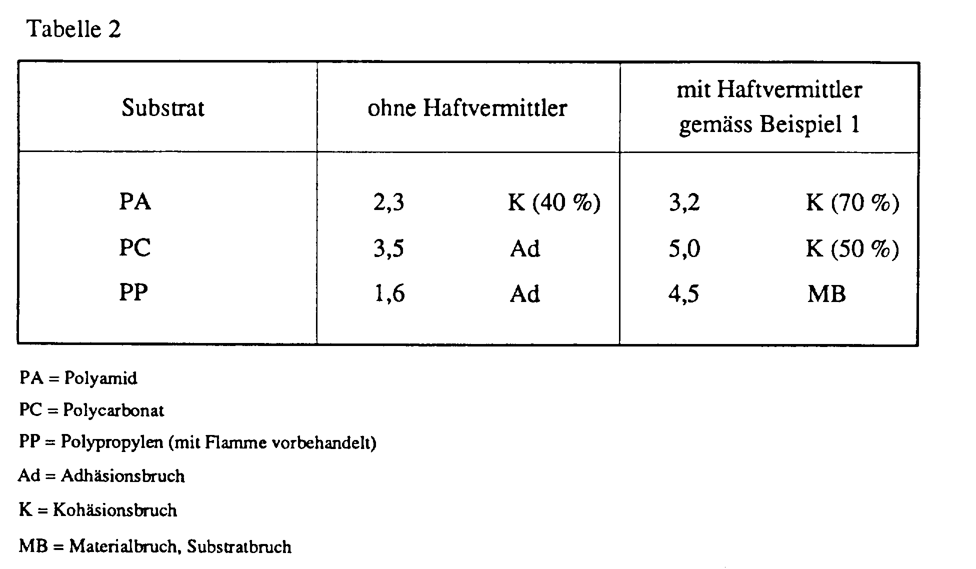

Die erhaltenen Werte zeigen, dass der Einsatz von Verbindungen gemäss vorliegender Erfindung als Haftvermittler die Zugscherfestigkeiten der Proben deutlich verbessert.

## Patentansprüche

1. Verbindungen der allgemeinen Formel I 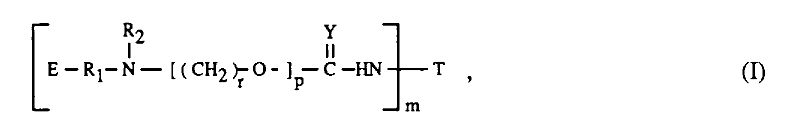 worin
R₁ C₂-C₃ Alkylen und
R₂ Wasserstoff, unsubstituiertes oder durch -OH, -CN oder -Si(OR₃)_{3-q}(R₄)_{q} substituiertes C₁-C₆-Alkyl oder C₂-C₆-Alkenyl bedeuten, wobei
R₃ C₁-C₄-Alkyl ist oder zwei Reste R₃ zusammen C₁-C₄-Alkylen darstellen,
R₄ C₁-C₄ Alkyl oder Phenyl ist und
q Werte von 0 bis 2 haben kann, ferner
E einen Rest der Formel 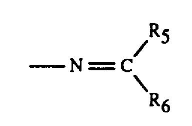 oder E zusammen mit R einen Rest der Formel 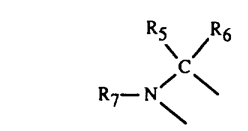 darstellt, wobei
R₅ und R₆ unabhängig voneinander Wasserstoff, C₁-C₄-Alkyl, Aryl-substituiertes Ethenyl, Aryl, Heteroaryl oder Reste der Formeln IIa oder IIb 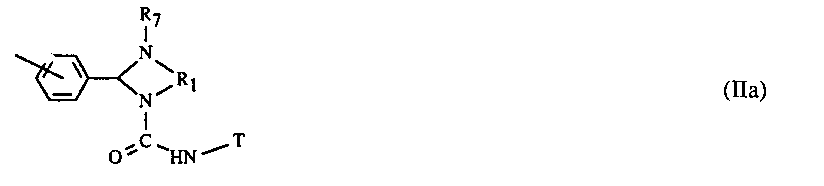 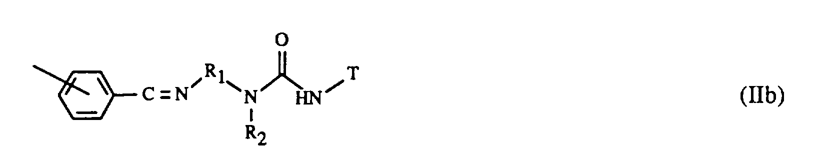 sind, mit der Massgabe, dass mindestens einer der Reste R₅ oder R₆ Aryl-substituiertes Ethenyl, Aryl, Heteroaryl oder einen Rest der Formeln IIa oder IIb bedeutet, und worin
R₇ Wasserstoff, C₁-C₄-Alkyl oder -R₉-Si(OR₃)_{3-q}(R₄)_{q} ist und R₃, R₄ und q die vorstehende Bedeutung haben und
R₉ C₁-C₈-Alkylen bedeutet, und
Y Sauerstoff oder Schwefel bedeuten; ferner
T einen Rest der Formeln -R₉-Si(OR₃)_{3-q}(R₄)_{q} oder 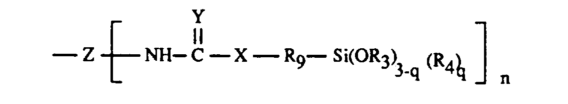 oder, falls R₇ einen Rest der Formel -R₉-Si(OR₃)_{3-q}(R₄)_{q} darstellt und m grösser oder gleich 2 ist, einen m-wertigen Rest Z bedeutet, worin R₃, R₄, R₉, Y und q die vorstehenden Bedeutungen haben,
X -S- oder -NH- ist und
Z ein organischer Rest ist, der sich von einem Polyisocyanat oder einem Polyisothiocyanat mit mindestens 2 NCO- bzw. NCS-Gruppen ableitet, und
r 1, 2 oder 3 und
p 0 oder 1 sind und
m Werte grösser oder gleich 1 und
n Werte grösser oder gleich 1 haben können.

2. Verbindungen der Formel I gemäss Anspruch 1, worin Y Sauerstoff bedeutet.

3. Verbindungen der Formel I gemäss Anspruch 1 , worin Z von einem aliphatischen, cycloaliphatischen, aliphatisch/aromatischen, aromatischen oder heterocyclischen Polyisocyanat oder Polyisothiocyanat mit grösser oder gleich 2 NCO- oder NCS-Gruppen abgeleitet ist, wobei der Rest Z gegebenenfalls eine oder mehrere Ester-, Ether-, Urethan-, Thiourethan-, Isocyanurat-, Hamstoff- oder Biuret-Funktionen enthalten kann.

4. Verbindungen der Formel I gemäss Anspruch 3, worin Z von einem aliphatischen oder gemischt aliphatisch/aromatischen Polyisocyanat mit grösser oder gleich 2 NCO-Gruppen abgeleitet ist, wobei dieser Rest Z gegebenenfalls gesamthaft eine oder zwei Ester-, Ether-, Urethan-, Thiourethan-, Isocyanurat-, Hamstoff- oder Biuret-Funktionen enthält.

5. Verbindungen der Formel I gemäss Anspruch 1, worin der Rest Z ein mittleres Molekulargewicht Mₙ kleiner als 10 000 aufweist.

6. Verbindungen der Formel I gemäss Anspruch 1, worin m und n unabhängig voneinander Werte von 1 bis 49 besitzen.

7. Verbindungen der Formel I gemäss Anspruch 1, worin die Summe m + n 2 bis 50 beträgt.

8. Verbindungen der Formel I gemäss Anspruch 1, worin n die Zahlen 1, 2 oder 3, und m die Zahlen 3, 2 oder 1 haben.

9. Verbindungen der Formel I gemäss Anspruch 1, worin R₁ Propylen darstellt.

10. Verbindungen der Formel I gemäss Anspruch 1, worin p den Wert 0 hat.

11. Verbindungen der Formel I gemäss Anspruch 1, worin q den Wert 0 hat.

12. Verbindungen der Formel I gemäss Anspruch 1, worin mindestens einer der Reste R₅ oder R₆ eine Gruppe der Formeln 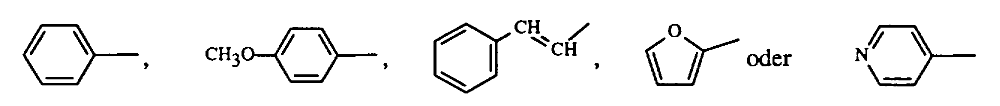 bedeutet.

13. Verbindungen der Formel I gemäss Anspruch 1, worin T einen Rest der Formeln -R₉-Si(OR₃)_{3-q}(R₄)_{q} oder 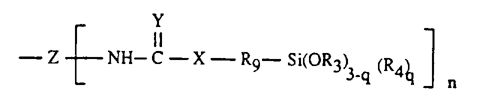 bedeutet, wobei X, Y, Z, R₃, R₄, R₉, q und n die im Anspruch 1 angegebene Bedeutung haben.

14. Verbindungen der Formel I gemäss Anspruch 13, worin mindestens ein Rest X -S- bedeutet.

15. Verbindungen der Formel I gemäss Anspruch 1, worin p und q 0 sind, m 1 und n 2 sind, Y Sauerstoff, X -S-, R₁ und R₉ Propylen, R₂ und R₃ Methyl, R₅ Phenyl und R₆ Wasserstoff bedeuten.

16. Polyurethanharze enthaltend mindestens eine Verbindung der Formel I gemäss Anspruch 1.

17. Polyurethanharze gemäss Anspruch 16, enthaltend 0,1 bis 20 Gew.-% einer Verbindung der Formel I.

## Claims

1. A compound of the general formula I 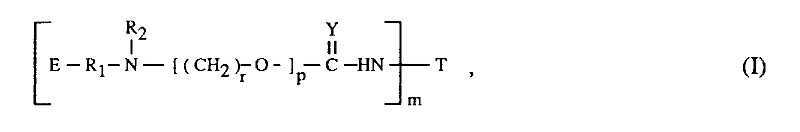 in which
R₁ is C₂-C₃alkylene and
R₂ is hydrogen, C₁-C₆alkyl which is unsubstituted or substituted by -OH, -CN or -Si(OR₃)_{3-q}(R₄)_{q} or is C₂-C₆alkenyl, in which
R₃ is C₁-C₄alkyl or two radicals R₃ together are C₁-C₄alkylene,
R₄ is C₁-C₄alkyl or phenyl and
q can have values from 0 to 2, furthermore
E is a radical of the formula 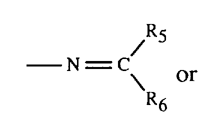
E together with R₂ is a radical of the formula 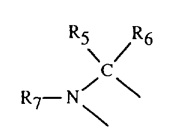 in which
R₅ and R₆, independently of one another, are hydrogen, C₁-C₄alkyl, aryl-substituted ethenyl, aryl, heteroaryl or radicals of the formulae IIa or IIb 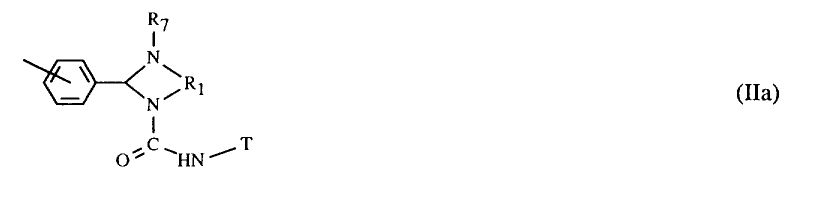 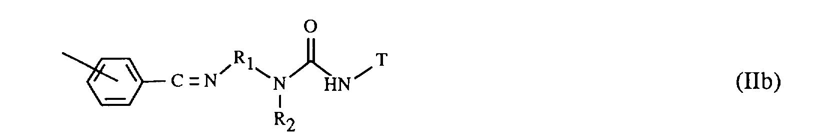 with the proviso that at least one of the radicals R₅ or R₆ is aryl-substituted ethenyl, aryl, heteroaryl or a radical of the formulae IIa or IIb
and in which R₇ is hydrogen, C₁-C₄alkyl or -R₉-Si(OR₃)_{3-q}(R₄)_{q} and R₃,R₄ and q are as defined above, and
R₉ is C₁-C₈alkylene,
and
Y is oxygen or sulfur; furthermore,
T is a radical of the formulae -R₉-Si(OR₃)_{3-q}(R₄)_{q} or 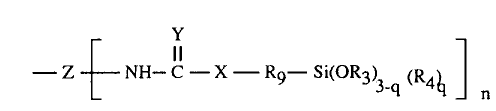 or, if R₇ is a radical of the formula -R₉-Si(OR₃)_{3-q}(R₄)_{q} and m is greater than or equal to 2, is an m-valent radical Z in which R₃, R₄, R₉, Y and q are as defined above,
X is -S- or -NH- and
Z is an organic radical which is derived from a polyisocyanate or a polyisothiocyanate having at least 2 NCO or NCS groups, and
r is 1, 2 or 3 and
p is 0 or 1 and
m can have values of greater than or equal to 1 and
n can have values of greater than or equal to 1.

2. A compound of the formula I according to claim 1, in which Y is oxygen.

3. A compound of the formula I according to claim 1, in which Z is derived from an aliphatic, cycloaliphatic, aliphatic/aromatic, aromatic or heterocyclic polyisocyanate or polyisothiocyanate in which the number of NCO or NCS groups is greater than or equal to 2, it being possible for the radical Z to contain, if desired, one or more ester, ether, urethane, thiourethane, isocyanurate, urea or biuret functions.

4. A compound of the formula I according to claim 3, in which Z is derived from an aliphatic or mixed aliphatic/aromatic polyisocyanate in which the number of NCO groups is greater than or equal to 2, it being possible for this radical Z to contain, if desired, a total of one or two ester, ether, urethane, thiourethane, isocyanurate, urea or biuret functions.

5. A compound of the formula I according to claim 1, in which the radical Z has an average molecular weight Mₙ of less than 10 000.

6. A compound of the formula I according to claim 1, in which m and n, independently of one another, have values from 1 to 49.

7. A compound of the formula I according to claim 1, in which the sum of m + n is 2 to 50.

8. A compound of the formula I according to claim 1, in which n is 1, 2 or 3 and m is 3, 2 or 1.

9. A compound of the formula I according to claim 1, in which R₁ is propylene.

10. A compound of the formula I according to claim 1, in which p has the value 0.

11. A compound of the formula I according to claim 1, in which q has the value 0.

12. A compound of the formula I according to claim 1, in which at least one of the radicals R₅ or R₆ is a group of the formulae

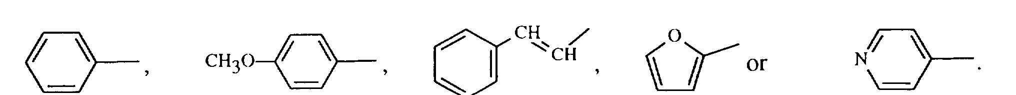

13. A compound of the formula I according to claim 1, in which T is a radical of the formulae -R₉-Si(OR₃)_{3-q}(R₄)_{q} or 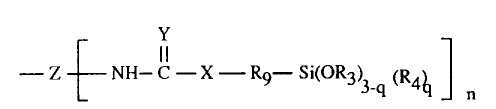 in which, X, Y, Z, R₃, R₄, R₉, q and n are as defined in claim 1.

14. A compound of the formula I according to claim 13, in which at least one radical X is -S-.

15. A compound of the formula I according to claim 1, in which p and q are 0, m is 1 and n is 2, Y is oxygen, X is -S-, R₁ and R₉ are propylene, R₂ and R₃ are methyl, R₅ is phenyl and R₆ is hydrogen.

16. A polyurethane resin containing at least one compound of the formula I according to claim 1.

17. A polyurethane resin according to claim 16, containing 0.1 to 20 % by weight of a compound of the formula I.

## Revendications

1. Composés de formule générale (I) : 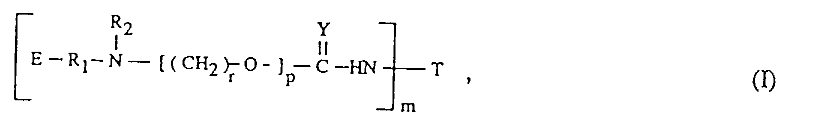 dans laquelle :
R₁ est un radical alkylène en C₂-C₃, et
R₂ est un hydrogène, un radical alkyle en C₁-C₆ ou alcényle en C2-C6 non substitué ou substitué par des substituants -OH, -CN ou -Si(OR₃)_{3-q}(R₄)_{q}, où :
R₃ est un radical alkyle en C₁-C₄ ou deux radicaux R₃ forment ensemble un radical alkylène en C₁-C₄,
R₄ est un radical alkyle en C₁-C₄ ou le radical phényle, et
q peut prendre des valeurs comprises entre 0 et 2, et de plus :
E est un résidu de formule : 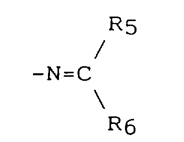 ou bien
E, avec R₂, représente un radical de formule : 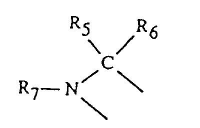 dans laquelle :
R₅ et R₆, indépendamment l'un de l'autre, sont des hydrogènes ou des radicaux alkyle en C₁-C₄, éthényle à substitution aryle, aryle, hétéroaryle, ou encore des radicaux de formules (IIa) ou (IIb) : 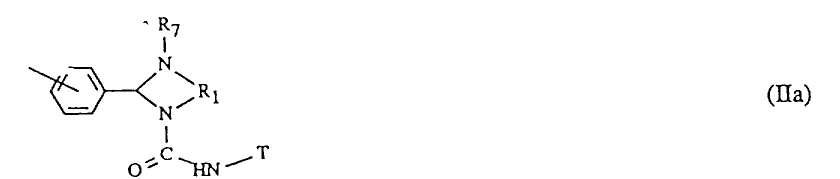 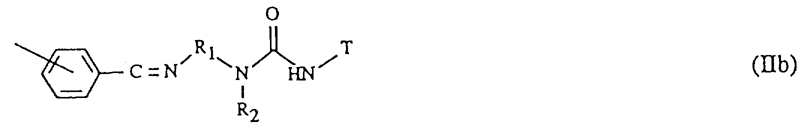 du moment qu'au moins l'un des radicaux R₅ ou R₆ est un radical éthényle à substitution aryle, aryle, hétéro-aryle ou un radical de formules (IIa) ou (IIb), et où R₇ est un hydrogène ou un radical alkyle en C₁-C₄, ou -R₉-Si (OR₃)_{3-q}(R₄)_{q}, et R₃, R₄ et q ont les significations données ci-dessus, et
R₉ est un radical alkylène en C₁-C₈, et
Y est un oxygène ou un soufre ; de plus
T est un radical de formules -R₉-Si(OR₃)_{3-q}(R₄)_{q} ou 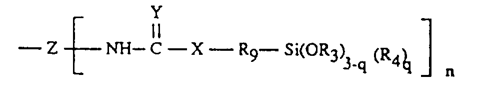 ou encore, si R₇ est un radical de formule -R₉-Si-(OR₃)_{3-q}(R₄)_{q} et m est supérieur ou égal à 2, représente un radical m-valent Z où R₃, R_{4,} R₉, Y et q ont les significations données ci-dessus,
X est -S- ou -NH-, et
Z est un radical organique qui dérive d'un polyisocyanate ou d'un polyisothiocyanate ayant au moins deux groupes NCO ou NCS, et
r vaut 1, 2 ou 3, et
p vaut 0 ou 1, et
m peut prendre une valeur supérieure ou égale à 1, et
n peut prendre une valeur supérieure ou égale à 1.

2. Composés de formule (I) selon la revendication 1, dans lesquels Y est un oxygène.

3. Composés de formule (I) selon la revendication 1, Sans lesquels Z dérive d'un polyisocyanate aliphatique, cycloaliphatique, aliphatique/aromatique, aromatique ou hétérocyclique, ou d'un polyisocyanate, ayant un nombre supérieur ou égal à 2 de groupes NCO ou NCS, le résidu Z pouvant éventuellement contenir une ou plusieurs fonctions éther, ester, uréthanne, thiouréthanne, isocyanurate, urée ou biuret.

4. Composés de formule (I) selon la revendication 3, dans lesquels Z dérive d'un polyisocyanate aliphatique ou aliphatique/aromatique mixte ayant un nombre supérieur ou égal à 2 de groupes NCO, où ce résidu Z contient éventuellement, en tout, une ou deux fonctions éther, ester, uréthanne, thiouréthanne, isocyanurate, urée ou biuret.

5. Composés de formule (I) selon la revendication 1, dans lesquels le résidu Z a une masse moléculaire moyenne Mₙ inférieure à 10 000.

6. Composés de formule (I) selon la revendication 1, dans lesquels m et n, indépendamment l'un de l'autre, ont une valeur de 1 à 49.

7. Composés de formule (I) selon la revendication 1, dans lesquels la somme m + n est de 2 à 50.

8. Composés de formule (I) selon la revendication 1, dans lesquels n vaut 1, 2 ou 3, et m vaut 3, 2 ou 1.

9. Composés de formule (I) selon la revendication 1, dans lesquels R₁ est le propylène.

10. Composés de formule (I) selon la revendication 1, dans lesquels p vaut 0.

11. Composés de formule (I) selon la revendication 1, dans lesquels q vaut 0.

12. Composés de formule (I) selon la revendication 1, dans lesquels au moins l'un des radicaux R₅ ou R₆ est un groupe de formule : 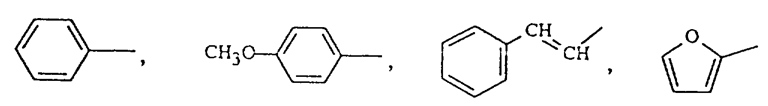 ou

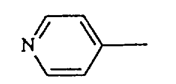

13. Composés de formule (I) selon la revendication 1, dans lesquels T est un radical ayant les formules -R₉-Si(OR₃)_{3-q}(R₄)_{q}, ou 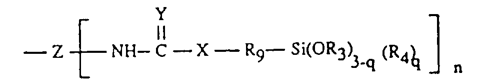 dans lesquelles X, Y, Z, R₃, R₄, R₉, q et n ont les significations données dans la revendication 1.

14. Composés de formule (I) selon la revendication 13, dans lesquels au moins un radical X est -S-.

15. Composés de formule (I) selon la revendication 1, dans lesquels p et q valent 0, m vaut 1 et n vaut 2, Y est un oxygène, X est -S-, R₁ et R₉ sont des radicaux propylène, R₂ et R₃ sont des radicaux méthyle, R₅ est le radical phényle et R₆ est un hydrogène.

16. Résines de polyuréthanne contenant au moins un composé de formule (I) selon la revendication 1.

17. Résines de polyuréthanne selon la revendication 16, contenant de 0,1 à 20 % en poids d'un composé de formule (I).
